# EUROPEAN PATENT APPLICATION

(11) **EP 4 375 783 A1**
(43) Date of publication of application: **29.05.2024**
(21) Application number: 23209719.6
(22) Date of filing: 14.11.2023
(51) Int. Cl.: G05D 1/00

(54) **SETTING METHOD, AUTOMATIC TRAVELING METHOD, SETTING SYSTEM, AND SETTING PROGRAM**

(30) Priority: 25.11.2022 JP 2022188283
(71) Applicant: Yanmar Holdings Co., Ltd., Osaka-shi, Osaka (JP)
(72) Inventor: NISHII, Yasuto, Okayama (JP); MURAYAMA, Masaaki, Okayama (JP); ISHIKAWA, Akira, Okayama (JP)
(74) Representative: Dennemeyer & Associates S.A.

(57) **Abstract**

[Problem] The problem relates to providing a setting method, an automatic traveling method, a setting system, and a setting program which are capable of improving work efficiency of work performed by multiple work vehicles in a work region.

[Solution] The setting processing part 211 registers the first work corresponding to the work vehicle 10a that automatically travels in the work range A1 within the field F, and registers the second work corresponding to the work vehicle 10b that automatically travels in the work range A2 within the field F. The generation processing part 212 generates the target route R1 for causing the work vehicle 10a to automatically travel for the work range A1, based on work information of the first work, and generates the target route R2 for causing the work vehicle 10b to automatically travel for the work range A2, based on work information of each of the first work and the second work, in a case where each of the first work and the second work is registered.

## Description

### TECHNICAL FIELD

The present invention relates to a setting method or the like for setting a target route along which a work vehicle is caused to perform automatic traveling.

### BACKGROUND ART

For improving work efficiency in a field, a system in which each of multiple work vehicles is caused to perform work while automatically traveling in one field is known. For example, a system that controls traveling of a slave work vehicle based on information of a master work vehicle and information of the slave work vehicle is known.

### PRIOR ART DOCUMENT

### PATENT DOCUMENT

Patent Document 1: Japanese Unexamined Patent Publication No. 2015-188351

### SUMMARY OF INVENTION

### TECHNICAL PROBLEM

Here, in the related art, for example, in a case where two work vehicles perform different work in the same field, a target route for automatic traveling is generated for each work vehicle. For example, in a case where the first work vehicle performs the first work in a field and then the second work vehicle performs the second work in the field, the target routes are individually generated for the respective work vehicles. Therefore, for example, in a case where the positional relationship between each of the target routes is not appropriate, there will be a problem that the first work and the second work are not appropriately performed in a cooperated manner and the work efficiency is reduced.

The object of the present invention is to provide a setting method, an automatic traveling method, a setting system, and a setting program which are capable of improving work efficiency of work performed by multiple work vehicles in a work region.

### SOLUTION TO PROBLEM

A setting method according to the present invention executes: registering first work corresponding to a first work vehicle that automatically travels in a first work range within a work region; registering second work corresponding to a second work vehicle that automatically travels in a second work range within the work region; and generating, in the first work range, a first target route for causing the first work vehicle to automatically travel, based on work information of the first work, and generating, in the second work range, a second target route for causing the second work vehicle to automatically travel, based on work information of each of the first work and the second work, in a case where each of the first work and the second work is registered.

An automatic traveling method according to the present invention is a method that executes: causing the first work vehicle to automatically travel in accordance with the first target route that is set within the work region by the setting method; and causing the second work vehicle to automatically travel in accordance with the second target route that is set within the work region by the setting method after the automatic traveling of the first work vehicle is started.

A setting system according to the present invention is equipped with a setting processing part and a generation processing part. The setting processing part registers first work corresponding to a first work vehicle that automatically travels in a first work range within a work region and registers second work corresponding to a second work vehicle that automatically travels in a second work range within the work region. The generation processing part generates, in the first work range, a first target route for causing the first work vehicle to automatically travel, based on work information of the first work, and generates, in the second work range, a second target route for causing the second work vehicle to automatically travel, based on work information of each of the first work and the second work, in a case where each of the first work and the second work is registered.

A setting program according to the present invention is a program for causing one or a plurality of processors to execute: registering first work corresponding to a first work vehicle that automatically travels in a first work range within a work region; registering second work corresponding to a second work vehicle that automatically travels in a second work range within the work region; and generating, in the first work range, a first target route for causing the first work vehicle to automatically travel, based on work information of the first work, and generating, in the second work range, a second target route for causing the second work vehicle to automatically travel, based on work information of each of the first work and the second work, in a case where each of the first work and the second work is registered.

### ADVANTAGEOUS EFFECTS OF INVENTION

According to the present invention, it is possible to provide a setting method, an automatic traveling method, a setting system, and a setting program which are capable of improving work efficiency of work performed by multiple work vehicles in a work region.

### BRIEF DESCRIPTION OF DRAWINGS

FIG. 1 is a diagram illustrating a configuration of an automat ic traveling system according to an embodiment of the presen t invention.
FIG. 2 is an external view diagram illustrating an example of a work vehicle according to an embodiment of the present in vention.
FIG. 3 is a diagram illustrating an example of a target route of one work vehicle according to an embodiment of the prese nt invention.
FIG. 4 is a diagram illustrating an example of a target route of another work vehicle according to an embodiment of the pr esent invention.
FIG. 5 is a diagram illustrating an example of a menu screen displayed on an operation terminal according to an embodime nt of the present invention.
FIG. 6 is a diagram illustrating an example of a registration screen displayed on the operation terminal according to an e mbodiment of the present invention.
FIG. 7 is a diagram illustrating an example of a work plan li st displayed on the operation terminal according to an embodi ment of the present invention.
FIG. 8 is a diagram illustrating a route creation screen displa yed on the operation terminal according to an embodiment of the present invention.
FIG. 9 is a diagram illustrating a registration confirmation sc reen displayed on the operation terminal according to an emb odiment of the present invention.
FIG. 10 is a diagram illustrating an example of a target route of one work vehicle according to an embodiment of the pres ent invention.
FIG. 11 is a diagram illustrating an example of a target route of another work vehicle according to an embodiment of the p resent invention.
FIG. 12 is a diagram illustrating an example of a target route of another work vehicle according to an embodiment of the p resent invention.
FIG. 13 is a diagram illustrating a work block setting screen displayed on the operation terminal according to an embodim ent of the present invention.
FIG. 14 is a diagram illustrating a cropping-model selection screen displayed on the operation terminal according to an e mbodiment of the present invention.
FIG. 15A is a diagram illustrating a route creation result scr een displayed on the operation terminal according to an embo diment of the present invention.
FIG. 15B is a diagram illustrating a route creation result sere en displayed on the operation terminal according to an embod iment of the present invention.
FIG. 16 is a flowchart illustrating an example of a procedure of a setting process executed by the automatic traveling syste m according to an embodiment of the present invention.
FIG. 17A is a diagram illustrating a route creation result scr een displayed on the operation terminal according to an embo diment of the present invention.
FIG. 17B is a diagram illustrating a route creation result sere en displayed on the operation terminal according to an embod iment of the present invention.
FIG. 18 is a diagram illustrating a travel screen displayed on the operation terminal according to another embodiment of t he present invention.
FIG. 19 is a diagram illustrating a registration confirmation screen displayed on the operation terminal according to another embodiment of the present invention.

### DESCRIPTION OF EMBODIMENTS

The following embodiments are concrete examples of the present invention, and are not intended to limit the technical scope of the present invention.

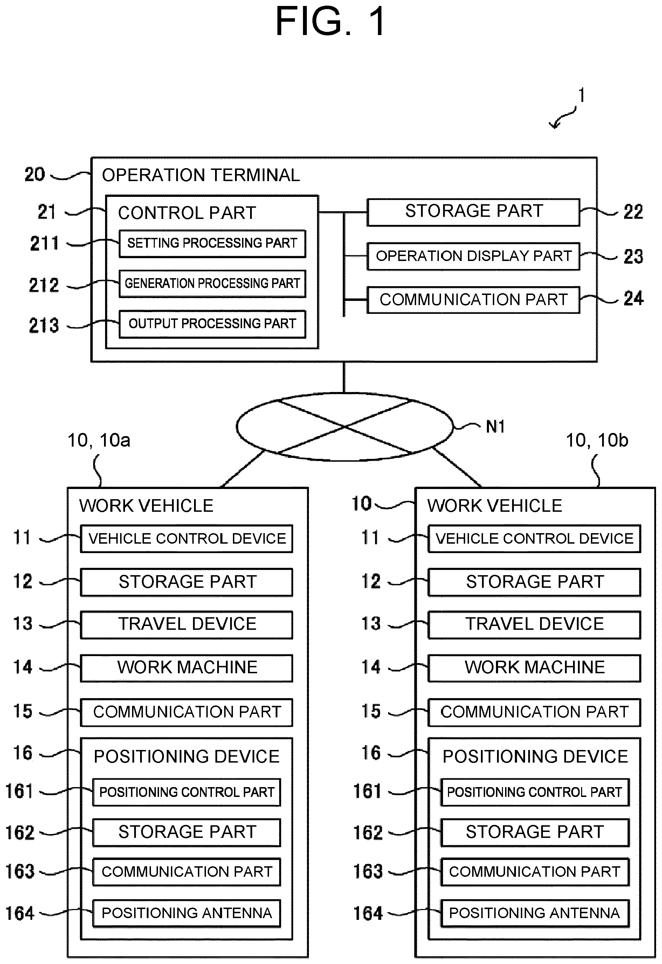

As illustrated in FIG. 1, the automatic traveling system 1 according to an embodiment of the present invention includes the work vehicles 10 and the operation terminal 20. Further, the automatic traveling system 1 includes the multiple work vehicles 10. Each work vehicle 10 and the operation terminal 20 can communicate via the communications network N1. For example, each work vehicle 10 and the operation terminal 20 can communicate via a mobile phone network, a packet network, or a wireless LAN. Note that, in the present embodiment, the operation terminal 20 is a device that sets and manages work information related to the multiple work vehicles 10, and may be configured with, for example, a management device, a server device, a cloud server, or the like. Further, as a configuration of another embodiment, it is also possible that the operation terminal 20 is arranged for each work vehicle 10 so that one operation terminal 20 can operate one work vehicle 10.

In the present embodiment, a case where the work vehicles 10 are tractors is taken as an example for the explanation. Note that, as another embodiment, the work vehicles 10 may be a rice transplanter, a combine harvester, a construction machine, a snowplow, or the like. The work vehicles 10 are equipped with a configuration capable of automatically traveling (autonomously traveling) in a field, which is a work region, in accordance with a target route that is set in advance. Further, the work vehicles 10 can perform predetermined work while automatically traveling in the field. For example, each of the work vehicles 10 performs predetermined work while automatically traveling in accordance with a target route that is set in advance in a field, based on the position information of a current position of the work vehicle 10 which is calculated by the positioning device 16.

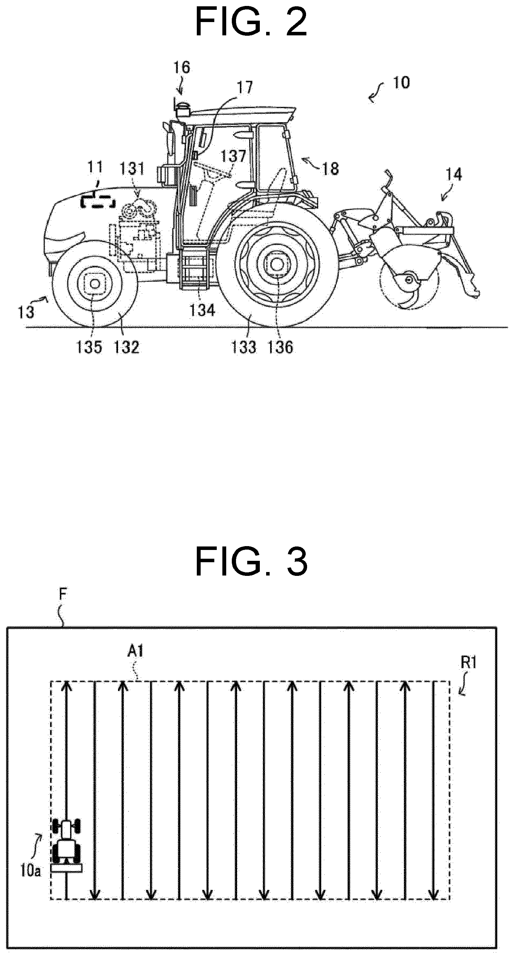

For example, the work vehicle 10a performs work in the field F illustrated in FIG. 3 while automatically traveling in accordance with the target route R1 which is set in advance. The work machine 14 (for example, a plowing machine) is mounted on the work vehicle 10a. The target route R1 includes linear work paths arranged as multiple rows and turning paths (not illustrated in the drawings) connecting the work paths. Note that at least a part of the multiple work paths may be curved paths. The work vehicle 10a performs plowing work while traveling reciprocally in the field F from one side (the left side in FIG. 3) toward the other side (the right side in FIG. 3) in accordance with the target route R1. In FIG. 3, the reference numeral A1 indicates the work range (the plowing range) of the work vehicle 10a.

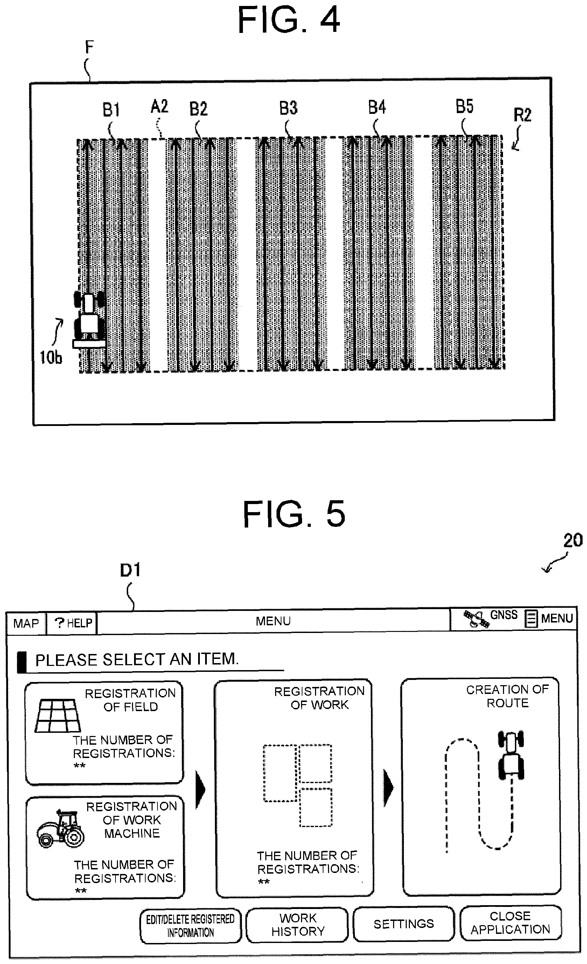

Further, for example, the work vehicle 10b performs work in the field F illustrated in FIG. 4 while automatically traveling in accordance with the target route R2 which is set in advance. For example, the work machine 14 (tilling machine) is mounted on the work vehicle 10b. The work vehicle 10b performs tiling in the region plowed by the work vehicle 10a (the work range A1). Note that, in the example illustrated in FIG. 4, the work range A2 of the work vehicle 10b is partitioned into the multiple work blocks B1 to B5 according to the positions where the work vehicle 10 travels in pest control work (the pest control paths (the inter-block paths)). That is, the work blocks B1 to B5 are regions partitioned based on the pest control paths.

The target route R2 includes the linear work paths arranged as multiple rows and the turning paths (not illustrated in the drawings) connecting the work paths. Note that at least a part of the multiple work paths may be curved paths. The work vehicle 10b performs tilling work while traveling reciprocally in the field F from one side (the left side in FIG. 4) toward the other side (the right side in FIG. 4) in accordance with the target route R2. In FIG. 4, the reference numeral A2 indicates the work range (the tilling range) of the work vehicle 10b.

In this way, the work vehicle 10a and the work vehicle 10b perform work in cooperation with each other in the same field F. For example, the work vehicle 10a performs the work (the plowing work) in advance, and the work vehicle 10b performs the work (the tilling work) after the work of the work vehicle 10a. It is not intended that the work contents of the respective work vehicles 10 are limited. For example, it is also possible that the work vehicle 10a performs the tilling work in advance and the work vehicle 10b performs ridging work after the work of the work vehicle 10a. Further, for example, it is also possible that the work vehicle 10a performs ridging work and planting work in advance and the work vehicle 10b performs weeding work and pest control work after the work of the work vehicle 10a.

Here, in the related art, for example, in a case where two work vehicles perform different work in the same field, a target route for automatic traveling is generated for each work vehicle. For example, in a case where the work vehicle 10a performs the first work in the field F and then the work vehicle 10b performs the second work in the field F, the target routes R1 and R2 are generated for the respective work vehicles. Therefore, for example, in a case where the positional relationship between the target routes R1 and R2 is not appropriate, there will be a problem that the first work and the second work are not appropriately performed in a cooperated manner and the work efficiency is reduced. For example, in a case where the ridging position corresponding to the target route R1 of ridging work and the planting position corresponding to the target route R2 of planting work after the ridging work do not match, it will be difficult to appropriately perform the ridging work and the planting work in a cooperated manner and the work efficiency will be reduced. On the other hand, in the automatic traveling system 1 according to the present embodiment, as described below, it is possible to improve the work efficiency of the work performed by the multiple work vehicles 10 in the field F.

Note that the automatic traveling system 1 may include three or more work vehicles 10. For example, the work vehicle 10c is equipped with a ridging machine, so as to perform work of forming ridges (ridging work) in the region tilled by the work vehicle 10b. Further, for example, the work vehicle 10d is equipped with a planting machine, so as to perform work of planting plants (planting work) in the region ridged by the work vehicle 10c. Further, for example, the work vehicle 10c is equipped with a pest control machine, so as to perform pest control work, such as spraying agricultural chemicals to the plants planted by the work vehicle 10d. In addition, the automatic traveling system 1 may include multiple work vehicles 10 that perform such work as reversing, weeding, and harvesting, respectively.

### [Work Vehicle 10]

As illustrated in FIG. 1 and FIG. 2, the work vehicles 10 include the vehicle control device 11, the storage part 12, the travel device 13, the work machine 14, the communication part 15, the positioning device 16, etc. The vehicle control device 11 is electrically connected to the storage part 12, the travel device 13, the work machine 14, the positioning device 16, etc. Note that the vehicle control device 11 and the positioning device 16 may be capable of performing wireless communication. Note that the term "work vehicle 10" is used for explanations of the configurations common to the work vehicle 10a and work vehicle 10b.

The communication part 15 is a communication interface for connecting the work vehicle 10 to the communications network N1 in a wired or wireless manner in order to execute data transmission in accordance with a predetermined communication protocol with external devices such as the operation terminal 20 or the like via the communications network N1. The work vehicle 10 can perform wireless communication with each of such operation terminals 20 via the communication part 15.

The storage part 12 is a non-volatile storage part such as a hard disk drive (HDD) or a solid state drive (SSD) that stores various kinds of information. The storage part 12 stores a control program such as an automatic traveling program for causing the vehicle control device 11 to execute automatic traveling processing. For example, the automatic traveling program is non-transitorily stored in a computer-readable storage medium such as a flash ROM, an EEPROM, a CD, or a DVD, which is read by a predetermined reading device (not illustrated in the drawings) to be stored in the storage part 12. Note that the automatic traveling program may be downloaded from a server (not illustrated in the drawings) to the work vehicle 10 via the communications network N1 to be stored in the storage part 12. Further, the storage part 12 may store the route data of a target route generated by the operation terminal 20.

The travel device 13 is a drive part that causes the work vehicle 10 to travel. As illustrated in FIG. 2, the travel device 13 is equipped with the engine 131 (drive source), the front wheels 132, the rear wheels 133, the transmission 134, the front axle 135, the rear axle 136, the steering wheel 137, etc. Note that the front wheels 132 and the rear wheels 133 are installed on the left and right of the work vehicle 10, respectively. Further, the travel device 13 is not limited to a wheel type equipped with the front wheels 132 and the rear wheels 133, and may be a crawler type equipped with crawlers installed on the left and right of the work vehicle 10.

The engine 131 is a drive source such as a diesel engine or a gasoline engine that is driven using fuel supplied to a fuel tank, which is not illustrated in the drawings. The travel device 13 may be equipped with an electric motor as a drive source together with the engine 131 or instead of the engine 131. Note that a generator, which is not illustrated in the drawings, is connected to the engine 131, so that electric power is supplied from the generator to electric components, such as the vehicle control device 11 installed in the work vehicle 10, a battery, etc. Note that the battery is charged by electric power supplied from the generator. Further, the electric components such as the vehicle control device 11 and the positioning device 16 installed in the work vehicle 10 can be driven by electric power supplied from the battery even after the engine 131 is stopped.

The driving force of the engine 131 is transmitted to the front wheels 132 via the transmission 134 and the front axle 135, and is transmitted to the rear wheels 133 via the transmission 134 and the rear axle 136. Further, the driving force of the engine 131 is also transmitted to the work machine 14 via a PTO shaft (not illustrated in the drawings). In a case where the work vehicle 10 performs automatic traveling, the travel device 13 performs a traveling action in accordance with a command from the vehicle control device 11.

The work machine 14 is, for example, a plowing machine, a reversing machine, a tilling machine, a ridging machine, a weeding machine, a pest control machine, or the like, and is attachable/detachable to/from the work vehicle 10. Accordingly, the work vehicle 10 can perform various kinds of work using each of the work machines 14. In FIG. 2, the case where the work machine 14 is a tilling machine is illustrated.

The steering wheel 137 is an operation part operated by the operator or the vehicle control device 11. For example, in the travel device 13, the angle of the front wheels 132 is changed by a hydraulic power steering mechanism or the like, which is not illustrated in the drawings, in accordance with the operation of the steering wheel 137 performed by the vehicle control device 11, so that the traveling direction of the work vehicle 10 is changed. For example, in a case where the operator performs a teaching operation, the operator operates the steering wheel 137 to cause the work vehicle 10 to travel manually.

Further, in addition to the steering wheel 137, the travel device 13 is equipped with a shift lever, an accelerator, a brake, etc., which are not illustrated in the drawings, to be operated by the vehicle control device 11. Furthermore, in the travel device 13, the gear of the transmission 134 is switched to a forward-traveling gear, a reverse gear, or the like, in accordance with an operation of the shift lever performed by the vehicle control device 11, so that the travel mode of the work vehicle 10 is switched to forward traveling, reverse traveling, or the like. Further, the vehicle control device 11 controls the rotation frequency of the engine 131 by operating the accelerator. Further, the vehicle control device 11 operates the brake to brake the rotation of the front wheels 132 and the rear wheels 133 using an electromagnetic brake.

The positioning device 16 is a communication device equipped with the positioning control part 161, the storage part 162, the communication part 163, the positioning antenna 164, etc. For example, as illustrated in FIG. 2, the positioning device 16 is installed on the upper part of the cabin 18 where an operator boards. Further, the installation location of the positioning device 16 is not limited to the cabin 18. Furthermore, the positioning control part 161, the storage part 162, the communication part 163, and the positioning antenna 164 of the positioning device 16 may be arranged at different positions of the work vehicle 10 in a distributed manner. Note that, as described above, the battery is connected to the positioning device 16, so that the positioning device 16 can be operated even when the engine 131 is stopped. Further, for example, a mobile phone terminal, a smartphone, a tablet terminal, or the like may be substituted as the positioning device 16.

The positioning control part 161 is a computer system equipped with one or multiple processors and storage memories such as a non-volatile memory and a RAM. The storage part 162 is a non-volatile memory or the like that stores a program for causing the positioning control part 161 to execute positioning processing and stores data such as positioning information and movement information. For example, the program is non-temporarily stored in a computer-readable storage medium such as a flash ROM, an EEPROM, a CD, or a DVD, which is read by a predetermined reading device (not illustrated in the drawings) to be stored in the storage part 162. Note that the program may be downloaded from a server (not illustrated in the drawings) to the positioning device 16 via the communications network N1 to be stored in the storage part 162.

The communication part 163 is a communication interface for connecting the positioning device 16 to the communications network N1 in a wired or wireless manner in order to execute data transmission in accordance with a predetermined communication protocol with external devices such as a base station (not illustrated in the drawings) via the communications network N1.

The positioning antenna 164 is an antenna that receives radio waves (GNSS signals) transmitted from satellites.

The positioning control part 161 calculates the current position of the work vehicle 10, based on a GNSS signal received by the positioning antenna 164 from a satellite. For example, in a case where the work vehicle 10 automatically travels in the field F, when the positioning antenna 164 receives radio waves (transmission time, orbit information, etc.) respectively transmitted from multiple satellites, the positioning control part 161 calculates the distance between the positioning antenna 164 and each satellite and calculates the current position (the latitude and longitude) of the work vehicle 10 based on the calculated distance. Further, the positioning control part 161 may perform positioning by a real-time kinematic method (RTK-GNSS positioning method (RTK method)) in which the current position of the work vehicle 10 is calculated using correction information corresponding to a base station (a reference station) close to the work vehicle 10. In this way, the work vehicle 10 automatically travels using the positioning information based on the RTK method. Note that the current position of the work vehicle 10 may be the same position as the position at which the positioning was performed (for example, the position of the positioning antenna 164), or may be a position shifted from the position at which the positioning was performed.

The vehicle control device 11 includes control devices such as a CPU, a ROM, and a RAM. The CPU is a processor that executes various kinds of arithmetic processing. The ROM is a non-volatile storage part in which control programs such as a BIOS and an OS for causing the CPU to execute various kinds of arithmetic processing are stored in advance. The RAM is a volatile or non-volatile storage part that stores various kinds of information, and is used as a temporary storage memory (a work region) for various kinds of processing executed by the CPU. Furthermore, the vehicle control device 11 controls the work vehicle 10 by causing the CPU to execute various kinds of control programs stored in advance in the ROM or the storage part 12.

The vehicle control device 11 controls the actions of the work vehicle 10 according to various kinds of user operations performed to the work vehicle 10. Further, the vehicle control device 11 executes automatic traveling processing of the work vehicle 10, based on the current position of the work vehicle 10 calculated by the positioning device 16 and a target route which is set in advance.

The vehicle control device 11 causes the CPU to execute various kinds of processing in accordance with the automatic traveling program, so as to function as the various kinds of processing parts. Further, some or all of the processing parts may be configured with electronic circuits. Note that the automatic traveling program may be a program for causing multiple processors to function as the processing parts.

Specifically, upon acquiring a travel start instruction from the operation terminal 20, the vehicle control device 11 starts automatic traveling of the work vehicle 10. For example, when the operator presses a start button on an operation screen of the operation terminal 20, the operation terminal 20 outputs the travel start instruction to the work vehicle 10. When the travel start instruction is acquired from the operation terminal 20, the vehicle control device 11 starts automatic traveling of the work vehicle 10 according to a target route. Accordingly, for example, the work vehicle 10a starts automatic traveling in the field F in accordance with the target route R1 (see FIG. 3), and performs work (for example, plowing work) with the work machine 14. Further, the work vehicle 10b starts automatic traveling in the field F in accordance with the target route R2 (see FIG. 4), and performs work (for example, tilling work) with the work machine 14. Note that the work vehicle 10b may start automatic traveling at a predetermined timing after the work vehicle 10a starts automatic traveling in response to the travel start instruction from the operator. That is, in the automatic traveling system 1, during a period from when one work vehicle 10 starts the first work to when the one work vehicle 10 ends the first work, another work vehicle 10 may start the second work in the region where the first work has already been done. The work start timing may be set in advance for each of the multiple work included in a work plan.

Note that the target route R1 along which the work vehicle 10a travels automatically and the target route R2 along which the work vehicle 10b travels automatically are generated in the operation terminal 20, for example. The work vehicle 10a acquires the route data corresponding to the target route R1 from the operation terminal 20 so as to automatically travel in accordance with the target route R1, and the work vehicle 10b acquires the route data corresponding to the target route R2 from the operation terminal 20 so as to automatically travel in accordance with the target route R2.

Further, upon acquiring a travel stop instruction from the operation terminal 20, the vehicle control device 11 stops the automatic traveling of the work vehicle 10. For example, when the operator presses a stop button on an operation screen of the operation terminal 20, the operation terminal 20 outputs the travel stop instruction to the work vehicle 10.

### [Operation Terminal 20]

As illustrated in FIG. 1, the operation terminal 20 is an information processing device equipped with the control part 21, the storage part 22, the operation display part 23, the communication part 24, etc. The operation terminal 20 may be configured with a mobile terminal such as a tablet terminal or a smartphone.

The communication part 24 is a communication interface for connecting the operation terminal 20 to the communications network N1 in a wired or wireless manner in order to execute data transmission in accordance with a predetermined communication protocol with external devices such as the multiple work vehicles 10 via the communications network N1.

The operation display part 23 is a user interface equipped with a display part, such as a liquid crystal display or an organic EL display that displays various kinds of information, and an operation part, such as a touch panel, a mouse, or a keyboard that receives an operation. The operator (user) can perform an operation of registering various kinds of information (the work vehicle information, field information, work information, and the like described hereinafter) by operating the operation part on an operation screen displayed on the display part. Further, the operator can provide a travel start instruction, a travel stop instruction, and the like to the work vehicle 10 by operating the operation part. Furthermore, the operator can grasp the traveling state of the work vehicle 10 automatically traveling in the field F in accordance with the target route, based on the traveling trajectory displayed on the operation terminal 20, at a place distant from the work vehicle 10.

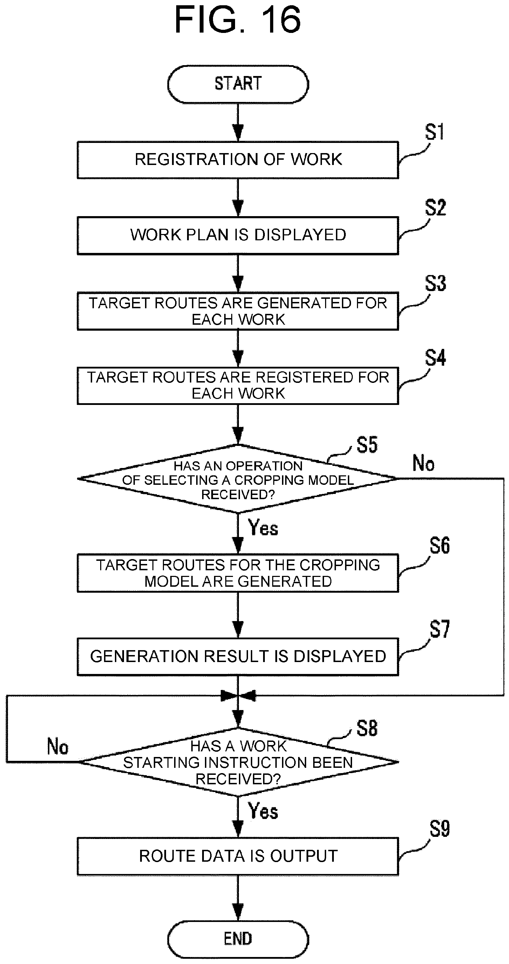

The storage part 22 is a non-volatile storage part such as an HDD or an SSD that stores various kinds of information. The storage part 22 stores a control program such as a setting program for causing the control part 21 to execute a setting process (see FIG. 16), which is described hereinafter. For example, the setting program is non-transitorily stored in a computer-readable recording medium such as a CD or a DVD, and read by a reading device (not illustrated in the drawings), such as a CD drive or a DVD drive included in the operation terminal 20, to be stored in the storage part 22. Note that the setting program may be downloaded from a server (not illustrated in the drawings) to the operation terminal 20 via the communications network N1 to be stored in the storage part 22.

Further, a dedicated application for causing the work vehicle 10 to automatically travel is installed in the storage part 22. The control part 21 activates the dedicated application to perform a process of setting various kinds of information related to the work vehicle 10, a process of generating a target route for the work vehicle 10, an automatic travel instruction for the work vehicle 10, and the like.

As illustrated in FIG. 1, the control part 21 includes various processing parts such as the setting processing part 211, the generation processing part 212, and the output processing part 213. Note that the control part 21 functions as the various processing parts by causing the CPU to execute various kinds of processing in accordance with the setting programs. Further, some or all of the processing parts may be configured with electronic circuits. Note that the setting program may be a program for causing multiple processors to function as the processing parts.

The setting processing part 211 sets information related to the work vehicle 10 (hereinafter referred to as work vehicle information). Specifically, on the operation terminal 20, the operator performs an operation of registering information such as the model of the work vehicle 10, the position at which the positioning antenna 164 is attached in the work vehicle 10, the type of the work machine 14, the size and shape of the work machine 14, the position of the work machine 14 relative to the work vehicle 10, the vehicle speed and engine rotation frequency of the work vehicle 10 during work, and the vehicle speed and engine rotation frequency of the work vehicle 10 during making a turn, so that the setting processing part 211 thereby sets the information.

For example, the operator selects "REGISTRATION OF WORK MACHINE" on the menu screen D1 illustrated in FIG. 5, in order to register the type of work machine (a tilling machine, ridging machine, pest control machine, etc.) and information of the work machine (a work width, an overlap width, etc.) on a registration screen (not illustrated in the drawings). Here, the operator repeats the registration operation of the work machine registration multiple times in accordance with a work plan. For example, the registration operation of the work machine registration is performed for each work of plowing, reversing, tilling, ridging, planting, weeding, pest controlling, and harvesting in accordance with a cultivation plan of a vegetable (such as a cabbage).

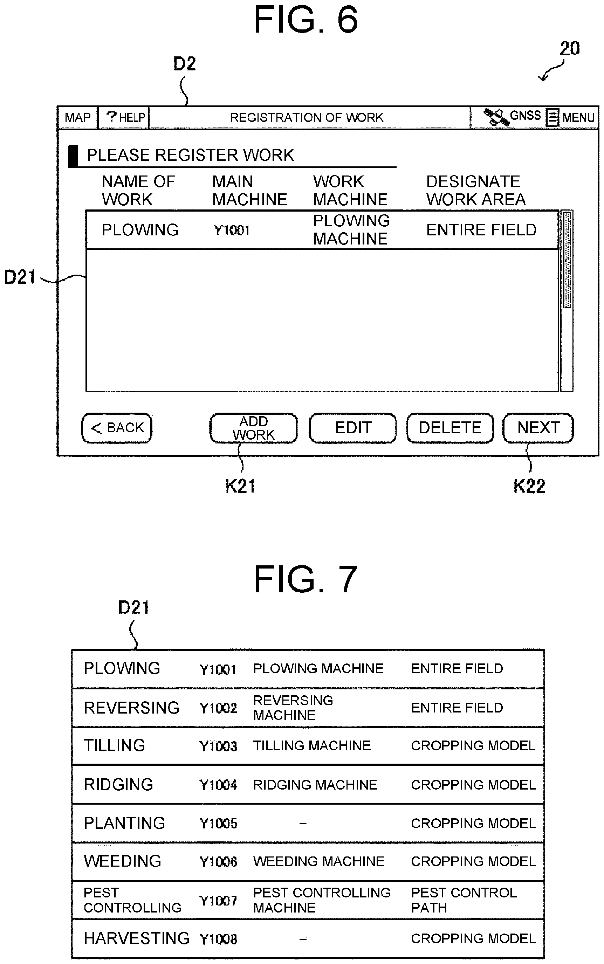

Subsequently, the operator selects "REGISTRATION OF WORK" on the menu screen D1 illustrated in FIG. 5, in order to register multiple work included in the work plan on the registration screen D2 (see FIG. 6). For example, on the registration screen D2 of FIG. 6, the operator presses the work addition button K21 and selects a work machine corresponding to the work plan from the multiple work machines registered in advance, in order to register work information such as a work area, a work method for headlands, unmanned traveling/manned traveling, a turning method, a vehicle speed, and an engine rotation frequency. Note that the work area is a setting item related to a region in which work is to be performed in the field F, and the operator selects any one of "work with selection of a cropping model and pest control paths", "work with selection of a cropping model", and "work in the entire field". Note that, for example, in tilling work, the operator may be able to select either one of "work with selection of a cropping model and pest control paths" and "work with selection of pest control paths". For example, in a case where the operator wants to perform tilling immediately before ridging or planting, the operator selects "work with selection of a cropping model and pest control paths" so as to set the cropping model and the pest control paths in the work area. Further, for example, in a case where the operator wants to perform tilling on pest control paths, the operator selects "work with selection of pest control paths" so as to set the pest control paths in the work area. The setting processing part 211 displays the work information registered by the operator in the work plan list D21. Specifically, on a setting screen for setting a work plan, the setting processing part 211 displays a list of the work contents, the identification information (names, model numbers, and the like) of the work vehicle 10 (the main machine) and the work machine 14, and the work areas for each work.

In FIG. 6, a state in which work information related to the work of "PLOWING" is registered. In a case of creating a work plan (for example, a cabbage cultivation plan), the operator presses the work addition button K21 on the registration screen D2, so as to register work information of each work of plowing, reversing, tilling, ridging, planting, weeding, pest controlling, and harvesting. In FIG. 7, the work plan list D21 in which the work information of each of the aforementioned work is registered is illustrated. In this way, the setting processing part 211 registers the first work corresponding to the first work vehicle 10 that automatically travels in the first work range of the field F, and registers the second work corresponding to the second work vehicle 10 that automatically travels in the second work range of the field F.

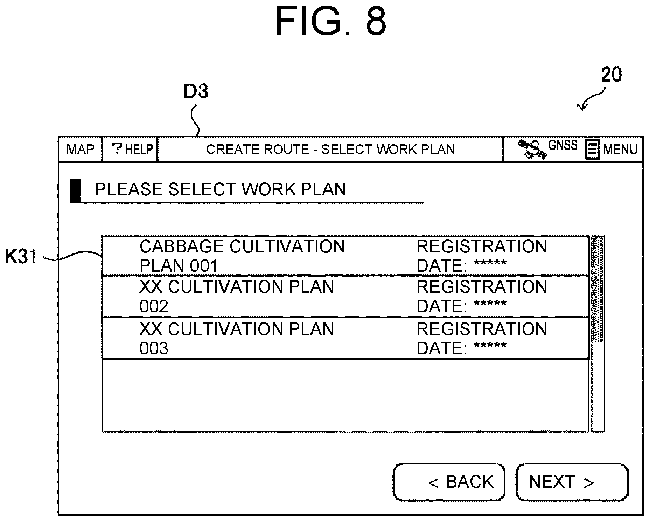

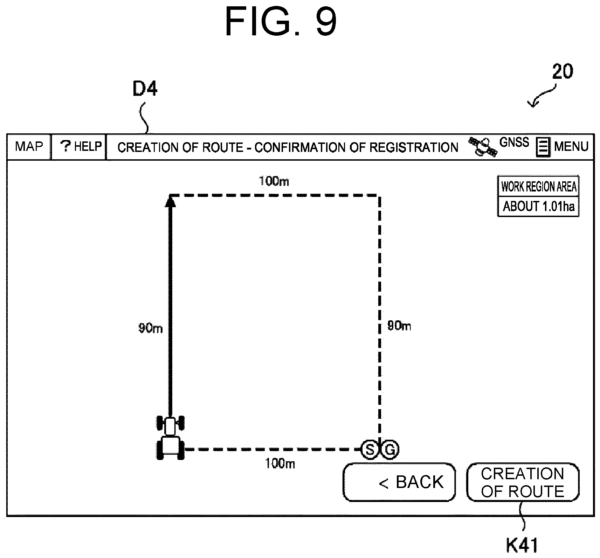

Subsequently, the operator selects "CREATION OF ROUTE" on the menu screen D1 illustrated in FIG. 5, in order to set a target route corresponding to each of the multiple work included in the work plan on the route creation screen D3 or the like (see FIG. 8, etc.). For example, on the route creation screen D3 of FIG. 8, the operator selects the work plan, which is a work target (here, "cabbage cultivation plan"), from the work plan selection screen K31. Thereafter, on a registration screen (not illustrated in the drawings), the operator selects a field to be the work target, designates a work region, sets a work direction, sets a work starting position and a work ending position, sets a headland width, etc. Upon registering each setting information, the setting processing part 211 displays the registration confirmation screen D4 (see FIG. 9).

The generation processing part 212 generates a target route along which the work vehicle 10 is caused to automatically travel in the field F, based on the work information and the setting information. For example, when the operator presses the route creation button K41 on the registration confirmation screen D4 of FIG. 9, the generation processing part 212 generates a target route corresponding to each of the multiple work included in the work plan. Here, the generation processing part 212 collectively (all at once) generates multiple target routes corresponding to the respective work of plowing, reversing, tilling, ridging, planting, weeding, pest controlling, and harvesting included in the cabbage cultivation plan. Note that the generation processing part 212 generates the same target route for work using the same work machine 14 and work paths (work ranges, work positions) among the multiple work.

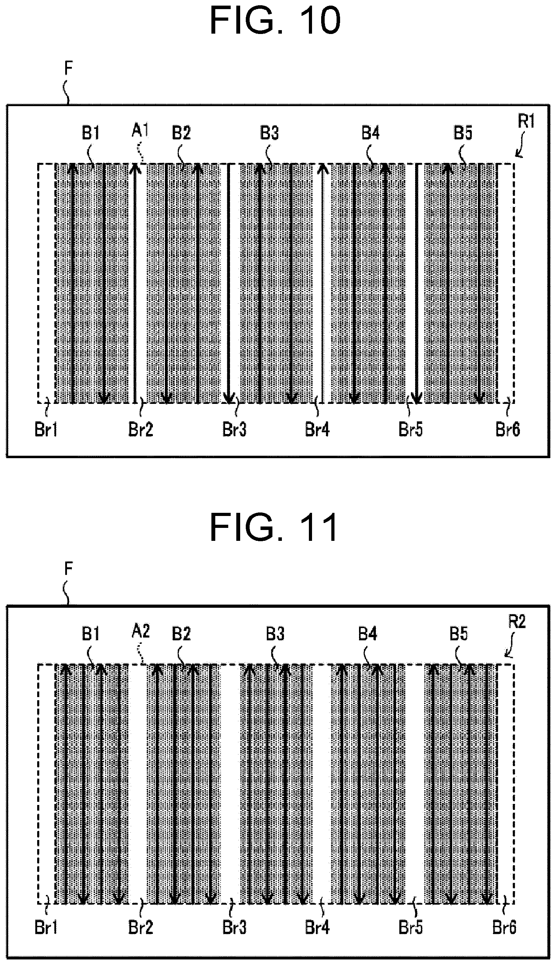

For example, as illustrated in FIG. 10, the generation processing part 212 generates the target route R1 for the work vehicle 10a that performs plowing work. Specifically, the generation processing part 212 generates the target route R1 in the work range A1 of the entire field F. Further, for the plowing work, the generation processing part 212 generates the target route R1 (an unrestricted target route), which is not affected (regarding the width and the number of work blocks, and the like) by other work (tilling work, ridging work, and the like).

Further, for example, as illustrated in FIG. 11, the generation processing part 212 generates the target route R2 for the work vehicle 10b that performs tilling work. Specifically, the generation processing part 212 generates the target route R2 in the work range A2 including the work blocks B1 to B5 in the field F. For example, the generation processing part 212 sets the work blocks B1 to B5 and generates multiple parallel straight-traveling paths in each region of the set work blocks B1 to B5. For the tilling work, the generation processing part 212 generates the target route R2 (a restricted target route), which is affected (regarding the plowing range, the width and the number of work blocks, the width and the number of pest control paths, and the like) by other work (for example, plowing work, ridging work, and pest control work).

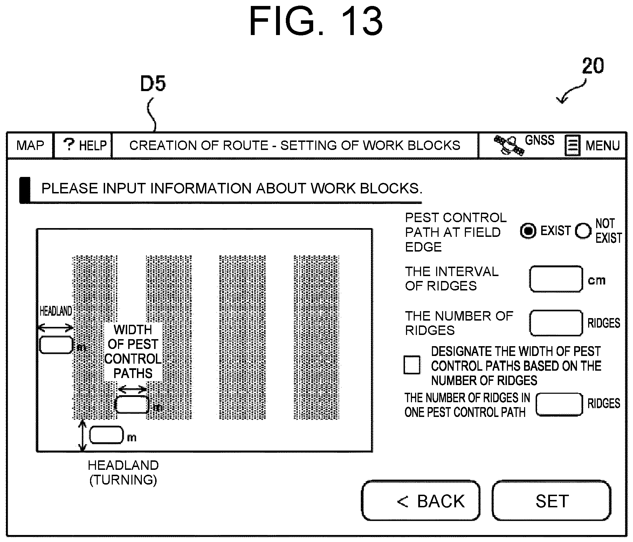

Here, an explanation is given of an example of the method of setting work blocks. FIG. 13 is an example of the work block setting screen D5. For example, on the work block setting screen D5, the operator inputs information such as the presence or absence of a pest control path at a field edge, the interval of ridges, the number of ridges, the width of a headland, and the width of a pest control path. For example, the operator inputs the interval of ridges of his/her own ridging machine. Further, for example, in a case of only performing planting without ridging, the operator inputs the interval of rows of a transplanting machine. Further, for example, in a case where the operator grasps the work range of his/her own pest control machine (sprayer), the operator inputs the number of ridges such that a value obtained by multiplying the number of ridges by the interval of ridges is within the work range of the pest control machine. Further, for example, in a case where the operator grasps how many ridges correspond to the track width of his/her own work vehicle 10 (tractor) or the width of a work machine (for example, a tilling machine), the operator inputs the number of ridges or the width. The generation processing part 212 sets work blocks for the field, based on these pieces of input information. Note that the generation processing part 212 may display the work blocks with the width and the number (the number of blocks) corresponding to the input information on the work block setting screen D5. Accordingly, the operator can confirm the width and the number of work blocks while changing the input information.

As another embodiment, the generation processing part 212 may acquire information such as the width of the work vehicle 10 and the width of the pest control machine (sprayer), so as to automatically set the width and positions of the work blocks and the width and positions of the pest control paths based on the acquired information. When the work blocks are set by the above-described setting method, the generation processing part 212 generates the target route R2 in the work range A2 including the work blocks (see FIG. 11).

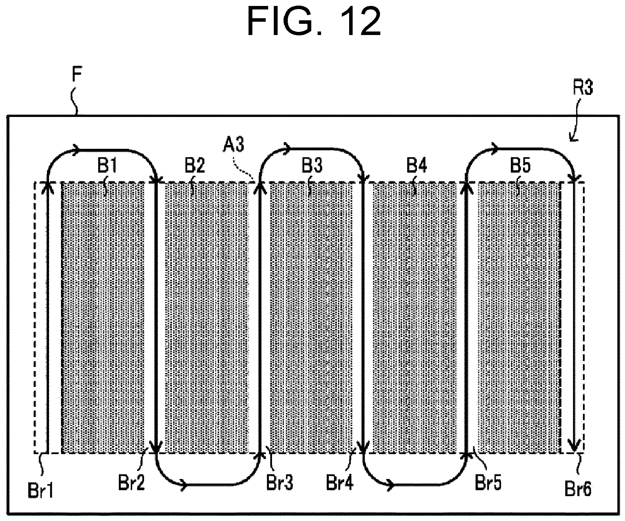

Further, for example, as illustrated in FIG. 12, the generation processing part 212 generates the target route R3 for the work vehicle 10c that performs pest control work. Specifically, the generation processing part 212 generates the target route R3 in the work range A3 including the pest control paths Br1 to Br6. For example, the generation processing part 212 generates one or multiple straight-traveling paths in each region of the pest control paths Br1 to Br6. For the pest control work, the generation processing part 212 generates the target route R3 (a restricted target route), which is affected (regarding a plowing range, the width and the number of work blocks, and the like) by other work (for example, plowing work and ridging work).

In this way, in a case where each of the first work and the second work is registered, the generation processing part 212 generates the first target route for causing the first work vehicle 10 to automatically travel and the second target route for causing the second work vehicle 10 to automatically travel, based on the first work range and the second work range. Further, the generation processing part 212 generates the first target route in the first work range, based on the work information of the first work, and generates the second target route in the second work range, based on the work information of each of the first work and the second work. For example, the first target route is a route that is set within the entire field F, and the second target route is a route that is set within a partial region (work blocks) of the field F. Further, for example, the first target route is a route that is set within work blocks, and the second target route is a route that is set between work blocks adjacent to each other.

The generation processing part 212 generates multiple target routes corresponding to each of the work of plowing, reversing, tilling, ridging, planting, weeding, pest controlling, and harvesting included in the work plan (cabbage cultivation plan) and registers the target routes in association with the work plan. In this way, the generation processing part 212 generates multiple target routes respectively corresponding to multiple work all at once according to a work plan. With the work plan list D21, the operator can easily confirm the work plan, and can easily confirm the target route corresponding to each work. For example, it is also possible that, in a case where the operator selects predetermined work in the work plan list D21 (see FIG. 7), the control part 21 displays the target route corresponding to the work. Accordingly, the operator can easily confirm the target route of each work.

Here, when starting work, the operator selects a field, selects work (a work plan), confirms target routes, and provides a work starting instruction. When the operator provides the work starting instruction, the output processing part 213 outputs the route data of the target routes generated by the generation processing part 212 to the work vehicle 10. Specifically, the output processing part 213 outputs the route data of the target route R1 to the work vehicle 10a, and outputs the route data of the target route R2 to the work vehicle 10b.

When the route data generated in the operation terminal 20 is transferred to the work vehicles 10, each work vehicle 10 stores the route data in the storage part 12. Each work vehicle 10 executes automatic traveling processing based on the route data while detecting the current position of the work vehicle 10 with the positioning antenna 164.

Here, in a case where "CROPPING MODEL" is set as a work area (see FIG. 6) in the registration of work (see FIG. 7), the generation processing part 212 receives an operation of selecting a cropping model that the work vehicle 10 actually performs work for from the operator, and generates (sets) a target route for the cropping model selected by the operator.

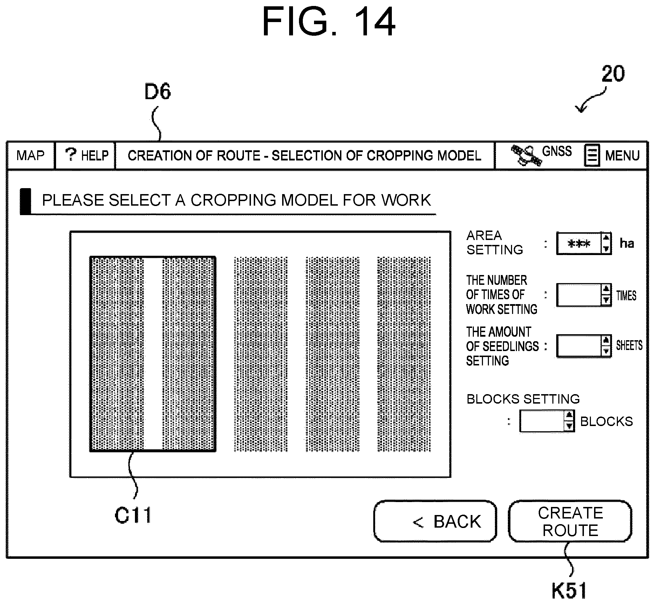

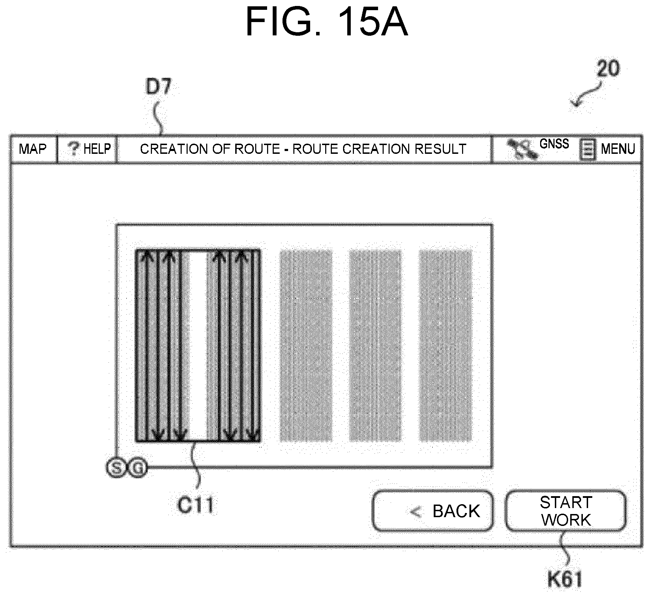

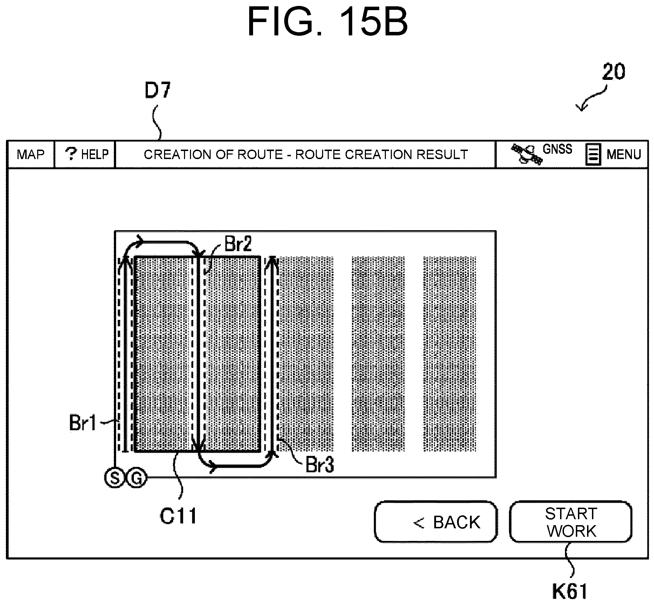

For example, on the cropping-model selection screen D6 illustrated in FIG. 14, the operator can set a cropping model by inputting setting information of any of the area of work, the number of times of work, the amount of seedlings to be transplanted, and the number of work blocks. For example, the generation processing part 212 sets the cropping-model range C11 (cropping-model range = the number of times of work × the length of the interval of ridges), based on the input number of times of work and the interval of ridges acquired when the work blocks are set. Further, the generation processing part 212 displays the cropping-model range C11 on the cropping-model selection screen D6 in a size corresponding to the input value of the setting information. In FIG. 14, the cropping-model range C11 in a case where a given area is input by the operator is illustrated. Note that, in FIG. 14, it is also possible that any one of the setting items, i.e., the area of work, the number of times of work, the amount of seedlings to be transplanted, and the number of work blocks, can be input. Note that it is also possible that the control part 21 is configured so that, when any one of the setting items is input, input of other setting items is not accepted until the input setting item is reset. Further, it is also possible that the control part 21 is configured so that the user can select a setting item to be displayed on the cropping-model selection screen D6 among the setting items. Accordingly, the user can arbitrarily set the setting items that can be input on the cropping-model selection screen D6. When the operator sets a cropping model to be the work target and presses the route creation button K51, the generation processing part 212 generates target routes (see FIG. 15A) corresponding to tilling work, ridging work, planting work, weeding work, and harvesting work, respectively, in the cropping-model range C11, and generates target routes (see FIG. 15B) corresponding to pest control work in the work range of the pest control paths Br1, Br2, and Br3 corresponding to the cropping-model range C11. The generation processing part 212 displays the generated target routes on the route creation result screen D7. Note that the generation processing part 212 may collectively display each target route of FIG. 15A and FIG. 15B on the route creation result screen D7.

In this way, regarding the work for which a work area has been set in advance in a part of the field F in the registration of work, the generation processing part 212 receives an operation of selecting an area (cropping model) where the work will be actually performed from now at the point in time of starting a series of work corresponding to the work plan, and executes a process of resetting the target routes for the received cropping model. That is, in a case where the work is performed on a partial region (cropping model) of the work region of the field F, the generation processing part 212 generates target routes corresponding to the cropping model (cropping-model range C11 that is set by the operator) where the work will be actually performed from now, based on the target routes generated for the entire field F in advance (see FIG. 10 and FIG. 11). For example, the operator selects a cropping model according to a cultivation time period (a harvest time period) of a vegetable (cabbage), and the generation processing part 212 sets target routes corresponding to the selected cropping model.

Note that it is also possible that, on the cropping-model selection screen D6 (see FIG. 14) that receives an operation of selecting a cropping model from the operator, the generation processing part 212 displays the region (cropping model) where the work has already been done in an unselectable manner and displays the region (cropping model) where the work has not been done yet in a selectable manner. For example, the generation processing part 212 may gray out the cropping model for which the work has already been done (for example, harvesting has already been done) in the display on the cropping-model selection screen D6. Further, the generation processing part 212 may distinguishably display the region where the work has already been done and the region where the work has not been done yet on the cropping-model selection screen D6.

Further, the generation processing part 212 may store the information of the once-selected cropping models, so as to utilize the stored information of the cropping models in the next operation of selecting a cropping model. For example, if the operator has set the range of the work blocks B1 and B2 as a cropping model to perform planting work, pest control work, etc., the generation processing part 212 sets the range of the work blocks B1 and B2 selected in the previous time as the current cropping-model range in advance for a case where the operator selects a cropping model in the next work. For example, the generation processing part 212 displays the previous cropping-model range in an identifiable manner in advance on the cropping-model selection screen D6. Accordingly, for example, in a case where it is necessary to repeatedly perform work (for example, pest control work) in the same range, the operator need not select the same cropping model each time, and thus it is possible to save time and effort for the operation of selecting a cropping model, and it is possible to prevent an error in selection of a cropping model.

Further, the generation processing part 212 may display one or multiple stored cropping models in a selectable manner on the cropping-model selection screen D6. For example, the operator selects multiple cropping models when starting harvesting work. In this case, the generation processing part 212 generates the target route of the harvesting work in the ranges of the multiple selected cropping models.

Note that it is also possible that the generation processing part 212 receives an operation of selecting a pest control path from the operator on the cropping-model selection screen D6 (see FIG. 14). In a case where the operator does not select a pest control path on an end side of the field F (the pest control path Br1), the generation processing part 212 generates a target route corresponding to the pest control work only in the work range of the pest control paths Br2 and Br3.

The operator confirms the generated target route on the route creation result screen D7 (see FIG. 15A and FIG. 15B), and presses the work start button K61 if it is determined that there is no problem. If the operator provides a work starting instruction, the output processing part 213 outputs the route data of the target route to the work vehicle 10. For example, the output processing part 213 outputs the route data of the target route generated for the set cropping model (the cropping-model range C11) to each of the work vehicles 10 that perform tilling work, ridging work, planting work, weeding work, and harvesting work, respectively, and outputs the route data of the target route generated for the pest control paths Br1, Br2, and Br3 to the work vehicle 10 that performs pest control work.

Upon acquiring the route data of the target route corresponding to the cropping model, each work vehicle 10 starts automatic traveling in accordance with the target route. Note that, here, each work vehicle 10 executes automatic traveling at a timing that is set for each work of plowing, reversing, tilling, ridging, planting, weeding, pest controlling, and harvesting.

Further, each work vehicle 10 executes automatic traveling processing based on the route data while detecting the current position of the work vehicle 10 with the positioning antenna 164. For example, in a case where the current position of each work vehicle 10 matches the travel starting position of the field F, if the start button is pressed on the operation screen by the operator to give a travel start instruction, the vehicle control device 11 of the work vehicle 10 starts automatic traveling in accordance with the target route.

In the present embodiment, the automatic traveling system 1 causes the work vehicle 10a to automatically travel in the field F in accordance with the target route R1, and causes the work vehicle 10b to automatically travel in accordance with the target route R2 after starting the automatic traveling of the work vehicle 10a. Further, it is also possible that the automatic traveling system 1 starts automatic traveling of the work vehicle 10a in the field F and then starts automatic traveling of the work vehicle 10b based on the work position of the work vehicle 10a.

While the work vehicles 10a and 10b are automatically traveling, the operator can grasp the traveling states, the work situations, etc., in the field F using the operation terminal 20.

Note that the operation terminal 20 may be able to access a website (agricultural support site) of an agricultural support service provided by a server via the communications network N1. In this case, with an operation control part executing a browser program, the operation terminal 20 can function as a terminal for operating the server. Furthermore, the server is equipped with each of the above-described processing parts, so as to execute each processing.

### [Setting Process]

Hereinafter, with reference to FIG. 16, an explanation is given of an example of the setting process to be executed by the control part 21 of the operation terminal 20. For example, the setting process is started by the control part 21 in a case where the control part 21 receives a setting operation for generating a target route of the work vehicle 10 from the operator.

Note that the present invention may be regarded as an invention of a setting method (an example of the setting method of the present invention) in which a part or all of the setting process is executed by the control part 21 or as an invention of a setting program (an example of the setting program of the present invention) for causing the control part 21 to execute a part or all of the setting method. Further, the setting process may be executed by one or multiple processors.

In Step S1, the control part 21 performs registration of work. For example, on the registration screen D2 of FIG. 6, when the operator presses the work addition button K21, selects a work machine corresponding to a work plan from multiple work machines registered in advance, and performs an operation of registering work information such as a work area, a work method for a headland, unmanned traveling/manned traveling, a turning method, a vehicle speed, and an engine rotation speed, the control part 21 registers the work information in association with the work. The control part 21 registers the work information of each of the multiple work included in the work plan, based on the registration operation of the operator. For example, when the operator performs an operation of registering work information of each work of plowing, reversing, tilling, ridging, planting, weeding, pest controlling, and harvesting in order to create a cabbage cultivation plan, the control part 21 registers the work information of each work in association with the cabbage cultivation plan.

Next, in Step S2, the control part 21 displays the work plan (the work plan list D21) including the work information of the multiple registered work. For example, as illustrated in FIG. 7, the control part 21 causes the operation display part 23 to display the work plan list D21 of the cabbage cultivation plan.

Next, in Step S3, the control part 21 generates a target route of each work. Specifically, the operator selects "CREATION OF ROUTE" on the menu screen D1 (see FIG. 5), selects a work plan (here, "CABBAGE CULTIVATION PLAN") on the route creation screen D3 (see FIG. 8), and performs selection of a field, designation of a work region, setting of a work direction, setting of a work starting position and a work ending position, setting of a headland width, etc., on a registration screen (not illustrated in the drawings). When each piece of the setting information is registered, the control part 21 displays the registration confirmation screen D4 (see FIG. 9).

When the operator presses the route creation button K41 on the registration confirmation screen D4, the control part 21 generates a target route corresponding to each of the multiple work included in the work plan. Here, the control part 21 generates multiple target routes corresponding to each of the work of plowing, reversing, tilling, ridging, planting, weeding, pest controlling, and harvesting included in the cabbage cultivation plan all at once. For example, the control part 21 generates the target route R1 in which the entire field F is set as the work range A1 (see FIG. 10) as the target route corresponding to tilling work and reversing work. Further, for example, the control part 21 sets the work blocks B1 to B5 for the field, based on information (the presence or absence of a pest control path at a field edge, the interval of ridges, the number of ridges, the width of a headland, the width of a pest control path, etc.) which is input by the operator on the work block setting screen D5 (see FIG. 13). Further, if the work blocks B1 to B5 are set, the control part 21 generates the target route R2 in which the work blocks B1 to B5 are set as the work range A2 (see FIG. 11) as the target route corresponding to tilling work, ridging work, planting work, weeding work, and harvesting work. Further, for example, the control part 21 generates the target route R3 in which the pest control paths Br1 to Br6 are set as the work range A3 (see FIG. 12) as the target route corresponding to pest control work.

Next, in Step S4, the control part 21 registers the generated target route of each work. Here, the control part 21 registers the multiple target routes corresponding to the respective work in association with the cabbage cultivation plan. Note that the processing of Steps S1 to S4 described above is executed at the time of registration and creation of the work plan and the target routes, and the subsequent processing of Steps S5 to S9 is executed at the time of work when the work is actually started (before the work is started). That is, in the automatic traveling system 1, the processing of Steps S1 to S4 and the processing of Steps S5 to S9 may be individually executed.

In Step S5, the control part 21 determines whether or not an operation of selecting a cropping model has been received from the operator. For example, in a case where "CROPPING MODEL" is set as the work area at the time of the registration of work (Step S1) (see FIG. 7), the control part 21 causes the cropping-model selection screen D6 (see FIG. 14) to be displayed, and receives an operation of selecting a cropping model for which work will be actually performed from the operator. The operator selects a cropping model for the work vehicle 10 to actually work from now. In FIG. 14, the range of the cropping model (the cropping-model range C11) that has been set by the operator inputting the area of work is illustrated.

In a case of receiving the operation of selecting a cropping model from the operator (S5: Yes), the control part 21 proceeds the processing to Step S6. On the other hand, in a case of not receiving the operation of selecting a cropping mode from the operator (S5: No), the control part 21 proceeds the processing to Step S8. Note that, in a case where "CROPPING MODEL" is not set as the work area at the time of the registration of work (Step S1) (see FIG. 7), the control part 21 may skip Step S5 and proceed the processing from Step S4 to Step S8.

In Step S6, the control part 21 generates (sets) a target route of the cropping model selected by the operator. In a case where the operator selects a cropping model of the cropping-model range C11 (see FIG. 14), the control part 21 generates target routes corresponding to tilling work, ridging work, planting work, weeding work, and harvesting work, respectively (see FIG. 15A), and a target route corresponding to pest control work (see FIG. 15B), based on the target routes generated in the Step S3.

Next, in Step S7, the control part 21 displays the generated target routes on the route creation result screen D7 (see FIG. 15A and FIG. 15B).

In Step S8, the control part 21 determines whether or not a work starting instruction has been received from the operator. For example, when the operator presses the work start button K61 on the route creation result screen D7 of FIG. 15A or FIG. 15B, the control part 21 determines that the work starting instruction has been received. Upon receiving the work starting instruction (S8: Yes), the control part 21 proceeds the processing to Step S9. The control part 21 stands by until the work starting instruction is received (S8: No).

In Step S9, the control part 21 outputs the route data of the generated target routes to the work vehicles 10. Here, the control part 21 outputs the route data of the target route generated for the entire field F to each of the work vehicles 10 that perform plowing work and reversing work, respectively, outputs the route data of the target route generated for the work blocks B1 and B2 to each of the work vehicles 10 that perform tilling work, ridging work, planting work, weeding work, and harvesting work, respectively, and outputs the route data of the target route generated for the pest control paths Br1, Br2, and Br3 to the work vehicle 10 that performs pest control work. Each of the work vehicles 10 executes automatic traveling in accordance with a target route at a timing that is set in advance for each work of plowing, reversing, tilling, ridging, planting, weeding, pest controlling, and harvesting.

As explained above, the automatic traveling system 1 according to the present embodiment registers the first work corresponding to the first work vehicle 10 that automatically travels in the first work range of the field F, and registers the second work corresponding to the second work vehicle 10 that automatically travels in the second work range of the field F. Further, in the automatic traveling system 1, in a case where each of the first work and the second work is registered, the first target route for causing the first work vehicle to automatically travel and the second target route for causing the second work vehicle to automatically travel are generated based on the first work range and the second work range.

For example, the automatic traveling system 1 generates the first target route (the target route R1 illustrated in FIG. 10) that is not affected (restricted) by subsequent work (for example, the second work) in the first work range, based on the work information of the first work, and generates the second target route (the target route R2 illustrated in FIG. 11) that is affected (restricted) by subsequent work in the second work range, based on the work information of each of the first work and the second work. Specifically, in a case where the first work is ridging work and the second work is planting work, the automatic traveling system 1 generates the target route (the second target route) of the planting work, which is the subsequent work, in accordance with the work position of the ridging work, which is the preceding work. Further, in a case where the first work is ridging work and the second work is pest control work, the automatic traveling system 1 generates the target route (the second target route) of the ridging work, which is the preceding work, in accordance with the work position of the pest control work, which is the subsequent work.

Further, for example, the automatic traveling system 1 registers a work plan including information about the first work vehicle 10 and the first work machine 14 used for the first work and information about the second work vehicle 10 and the second work machine 14 used for the second work, and generates the first target route and the second target route in a case where the work plan is registered.

According to the above-described configuration, for example, when a work plan is registered, multiple target routes respectively corresponding to multiple work included in the work plan can be generated collectively (all at once). Further, it is possible to generate each target route in consideration of work information (a work range or the like) of each work. For example, the planting work can be performed in the region (cropping model) of the field F where the ridging work is performed, and the planting work can be omitted for the region of the field F where the ridging work is not performed. Further, for example, regarding the plowing work, the plowing work can be performed in the entire field F without considering the ranges (cropping models) of the subsequent tilling work, ridging work, and the like. Therefore, since the target routes can be generated by setting an appropriate work range according to each work, it is possible to improve work efficiency of the work performed by the multiple work vehicles 10 in the field F.

### [Other Embodiments]

The present invention is not limited to the above-described embodiment, and may be the following embodiments.

For example, in a case where multiple target routes respectively corresponding to multiple work included in a work plan are collectively generated, there is a possibility that a target route corresponding to certain work protrudes to the outside of the field F. For example, in a case where the target route of the first work is generated, if the target route of the first work is generated in consideration of the work range of the second work which is the subsequent work, a part of the target route may protrude to the outside of the field F.

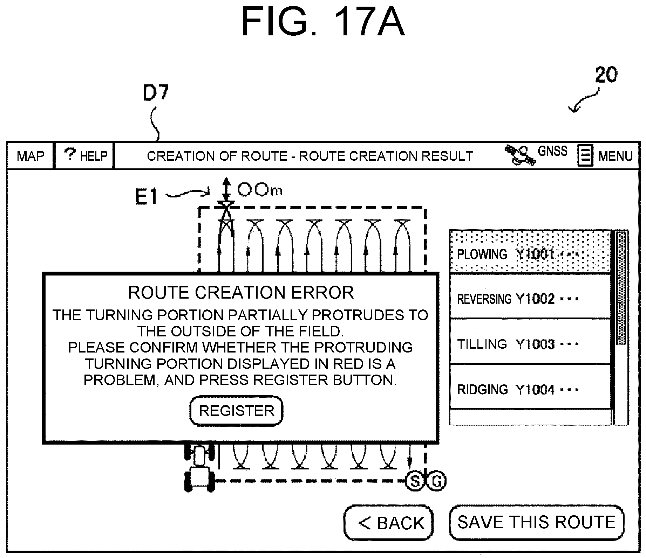

In FIG. 17A, an example in which a part of the target route of plowing work protrudes to the outside of the field F is illustrated. In this case, as illustrated in FIG. 17A, the control part 21 may display warning information (a route generation error) indicating that a part of the target route protrudes to the outside of the field F on the route creation result screen D7. Further, the control part 21 may display the protrusion distance E1 while displaying the portion protruding to the outside of the field F in an identifiable manner. Note that, on the route creation result screen D7, the control part 21 may display the warning information (the route generation error) at a position that does not overlap the map (the field) (at a margin portion of the route creation result screen D7 illustrated in FIG. 17A).

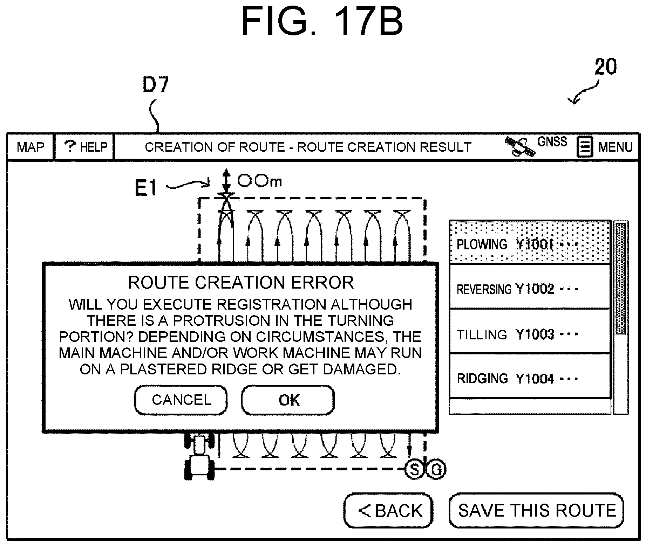

Further, in a case where the operator presses the "REGISTER" button in response to the warning information illustrated in FIG. 17A, the control part 21 may display a reconfirmation message as illustrated in FIG. 17B. In a case where the operator presses the "OK" button in response to the confirmation message illustrated in FIG. 17B, the control part 21 generates the target route whose part protrudes to the outside of the field F. Further, in a case where the operator presses the "CANCEL" button in response to the confirmation message illustrated in FIG. 17B, the control part 21 may regenerate a target route such that the protruding portion fits within the field F.

Further, after generating the target route corresponding to the plowing work, in a case where a part of the target route corresponding to another work also protrudes to the outside of the field F, the control part 21 executes the same processing as in FIG. 17A and FIG. 17B for the target route corresponding to the other work. The control part 21 repeatedly executes the processing until the route generation error is solved for the target routes of all work, so as to generate each target route of the work plan.

In this way, in the processing of generating the first target route and the second target route, the control part 21 may cause warning information to be displayed on the route generation screen (the route creation result screen D7) if it is determined that, in a case where the work vehicle 10 performs automatic traveling, a part of the vehicle body protrudes to the outside of the field F on at least one of the first target route and the second target route.

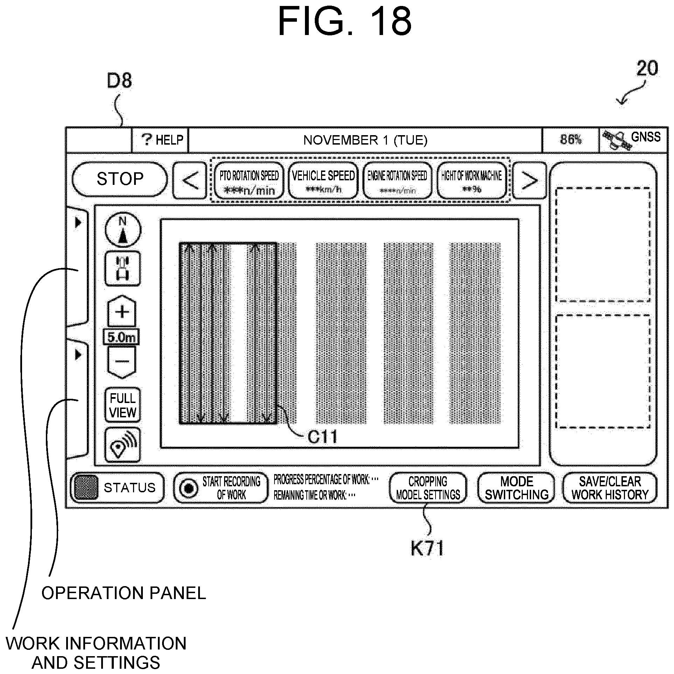

As another embodiment of the present invention, the control part 21 of the operation terminal 20 may set a cropping model, based on a work result of the work vehicle 10. For example, when the operator presses the "CROPPING MODEL SETTINGS" button K71 on the travel screen D8 (see FIG. 18) while the work vehicle 10 is performing ridging work, the control part 21 sets the region where the work vehicle 10 has already performed the ridging work as the cropping model (the cropping-model range C11). When the cropping model is set based on the work result, the control part 21 generates a target route for the cropping model, for example, when generating a target route for the next work (planting, weeding, pest controlling, harvesting, or the like). In this way, the control part 21 may set a cropping model based on a work history and generate a target route for the next work based on the cropping model. Further, the control part 21 may update a cropping model for each work. According to the above-described configuration, it is possible to set a range intended by the operator as a cropping model when actually performing work.

Further, the control part 21 may display (display in a pop-up manner) a message prompting the setting operation of a cropping model on the travel screen D8 illustrated in FIG. 18. For example, in a case where a target value (setting information such as the area of work, the number of times of work, the amount of seedlings to be transplanted, and the number of work blocks) serving as a guide of the cropping-model range C11 is registered in advance, the control part 21 may cause the message to be displayed in a pop-up manner at a point in time where the work result approaches the target value.

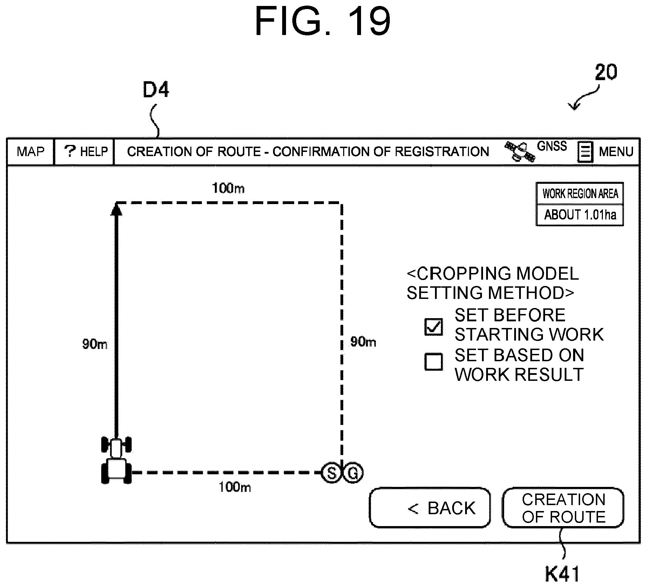

Further, the control part 21 may allow the operator to select whether to set a cropping model before starting work (see FIG. 14) or to set a cropping model based on a work result. For example, on the registration confirmation screen D4 illustrated in FIG. 19, the control part 21 receives an operation of selecting either "SET BEFORE STARTING WORK" or "SET BASED ON WORK RESULT" from the operator for the method of setting the cropping model. In a case where the operator selects "SET BEFORE STARTING WORK", the control part 21 generates target routes (FIG. 10 to FIG. 12), displays the cropping-model selection screen D6 illustrated in FIG. 14, and receives an operation of setting a cropping model from the operator. On the other hand, in a case where the operator selects "SET BASED ON WORK RESULT", the control part 21 generates target routes (FIG. 10 to FIG. 12), ends various registration operations, and receives an operation of setting a cropping model from the operator during work after the start of the work (see FIG. 18).

Note that the control part 21 may set a cropping model before the start of work and also update the cropping model based on a work result. In this case, for example, the work vehicle 10a may perform the first work for the first cropping model that is set in advance, and the work vehicle 10b may perform the second work for the second cropping model that is set based on a work result. As described above, the control part 21 generates a target route for the cropping model that is set by the operator in the field F (a cropping model that is set before the start of work, a cropping model that is set based on a work result, etc.).

The setting system of the present invention may be configured with the operation terminal 20 alone, may be configured with the work vehicle 10 and the operation terminal 20, or may be configured with the work vehicle 10 alone. Further, the setting system may be configured with a server equipped with each processing part included in the operation terminal 20.

### [Supplementary Notes of Invention]

Hereinafter, a summary of the invention extracted from the embodiments is described as supplementary notes. Note that each configuration and processing function explained in the supplementary notes below may be selected, omitted, and combined as appropriate.

### <Supplementary Note 1>

A setting method that executes:
registering first work corresponding to a first work vehicle that automatically travels in a first work range within a work region;
registering second work corresponding to a second work vehicle that automatically travels in a second work range within the work region; and
generating, in the first work range, a first target route for causing the first work vehicle to automatically travel, based on work information of the first work, and generating, in the second work range, a second target route for causing the second work vehicle to automatically travel, based on work information of each of the first work and the second work, in a case where each of the first work and the second work is registered.

### <Supplementary Note 2>

The setting method according to Supplementary Note 1,
wherein a work plan, which includes information of the first work vehicle and a first work machine that are used for the first work and information of the second work vehicle and a second work machine that are used for the second work, is registered, and
the first target route and the second target route are generated in a case where the work plan is registered.

### <Supplementary Note 3>

The setting method according to Supplementary Note 2,
wherein, on a registration screen where the work plan is registered, a list of work contents, identification information of work vehicles, identification information of work machines, and work ranges is displayed for each work.

### <Supplementary Note 4>

The setting method according to any one of Supplementary Notes 1 to 4,
wherein the first target route is a route that is set to an entirety of the work region, and the second target route is a route that is set to a partial region of the work region.

### <Supplementary Note 5>

The setting method according to Supplementary Note 4,
wherein the second target route is generated in a set range, which is selected by a user within the work region.

### <Supplementary Note 6>

The setting method according to Supplementary Note 5,
wherein, on a selection screen where an operation of selecting the set range is received from the user, a region where work has already been done within the work region and a region where work has not been done yet within the work region are displayed in an identifiable manner.

### <Supplementary Note 7>

The setting method according to Supplementary Note 6,
wherein, on the reception screen, the region where work has already been done within the work region is displayed in an unselectable manner and the region where work has not been done yet within the work region is displayed in a selectable manner.

### <Supplementary Note 8>

The setting method according to any one of Supplementary Notes 1 to 7,
wherein a plurality of work blocks is included in the work region,
the first target route is generated for the first work range which is selected by a user within the work region, and
the second target route is generated for the second work range which includes a region between adjacent two of the work blocks within the first work range.

### <Supplementary Note 9>

The setting method according to any one of Supplementary Notes 1 to 8,
wherein, in a process of generating the first target route and the second target route, warning information is displayed on a route generation screen in a case where it is determined that at least one of the first target route and the second target route partially protrudes to an outside of the work region in automatic traveling of work vehicles.

### <Supplementary Note 10>

An automatic traveling method that executes:
causing the first work vehicle to automatically travel in accordance with the first target route that is set within the work region by the setting method according to any of Supplementary Notes 1 to 9; and
causing the second work vehicle to automatically travel in accordance with the second target route that is set within the work region by the setting method according to any of Supplementary Notes 1 to 9 after the automatic traveling of the first work vehicle is started.

### REFERENCE SIGNS LIST

1: Automatic traveling system
10: Work vehicle
10a: Work vehicle (the first work vehicle)
10b: Work vehicle (the second work vehicle)
11: Vehicle control device
12: Storage part
14: Work machine
20: Operation terminal
21: Control part
22: Storage part
23: Operation display part
24: Communication part
211: Setting processing part
212: Generation processing part
213: Output processing part
A1: Work range (the first work range)
A2: Work range (the second work range)
A3: Work range
B1 to B5: Work block
Br1 to Br6: Pest control path
C11: Cropping-model range (setting range)
D1: Menu screen
D2: Registration screen
D21: Work plan list
D3: Route creation screen
D4: Registration confirmation screen
D6: Cropping-model selection screen (reception screen)
D7: Route creation result screen
D8: Travel screen (reception screen)
F: Field
K31: Work plan selection screen
R1: Target route (the first target route)
R2: Target route (the second target route)
R3: Target route

## Claims

1. A setting method that executes:
registering first work corresponding to a first work vehicle that automatically travels in a first work range within a work region;
registering second work corresponding to a second work vehicle that automatically travels in a second work range within the work region; and
generating, in the first work range, a first target route for causing the first work vehicle to automatically travel, based on work information of the first work, and generating, in the second work range, a second target route for causing the second work vehicle to automatically travel, based on work information of each of the first work and the second work, in a case where each of the first work and the second work is registered.

2. The setting method according to claim 1,
wherein a work plan, which includes information of the first work vehicle and a first work machine that are used for the first work and information of the second work vehicle and a second work machine that are used for the second work, is registered, and
the first target route and the second target route are generated in a case where the work plan is registered.

3. The setting method according to claim 2,
wherein, on a registration screen where the work plan is registered, a list of work contents, identification information of work vehicles, identification information of work machines, and work ranges is displayed for each work.

4. The setting method according to claim 1,
wherein the first target route is a route that is set to an entirety of the work region, and the second target route is a route that is set to a partial region of the work region.

5. The setting method according to claim 4,
wherein the second target route is generated in a set range, which is set by a user within the work region.

6. The setting method according to claim 5,
wherein, on a reception screen where an operation of setting the set range is received from the user, a region where work has already been done within the work region and a region where work has not been done yet within the work region are displayed in an identifiable manner.

7. The setting method according to claim 6,
wherein, on the reception screen, the region where work has already been done within the work region is displayed in an unselectable manner and the region where work has not been done yet within the work region is displayed in a selectable manner.

8. The setting method according to claim 1,
wherein a plurality of work blocks is included in the work region,
the first target route is generated for the first work range which is selected by a user within the work region, and
the second target route is generated for the second work range which includes a region between adjacent two of the work blocks within the first work range.

9. The setting method according to any one of claims 1 to 8,
wherein, in a process of generating the first target route and the second target route, warning information is displayed on a route generation screen in a case where it is determined that at least one of the first target route and the second target route partially protrudes to an outside of the work region in automatic traveling of work vehicles.

10. An automatic traveling method that executes:
causing the first work vehicle to automatically travel in accordance with the first target route that is set within the work region by the setting method according to any of claims 1 to 8; and
causing the second work vehicle to automatically travel in accordance with the second target route that is set within the work region by the setting method according to any of claims 1 to 8 after the automatic traveling of the first work vehicle is started.

11. A setting system comprising:
a setting processing part that registers first work corresponding to a first work vehicle that automatically travels in a first work range within a work region and registers second work corresponding to a second work vehicle that automatically travels in a second work range within the work region; and
a generation processing part that generates, in the first work range, a first target route for causing the first work vehicle to automatically travel, based on work information of the first work, and generates, in the second work range, a second target route for causing the second work vehicle to automatically travel, based on work information of each of the first work and the second work, in a case where each of the first work and the second work is registered.

12. A setting program for causing one or a plurality of processors to execute:
registering first work corresponding to a first work vehicle that automatically travels in a first work range within a work region;
registering second work corresponding to a second work vehicle that automatically travels in a second work range within the work region; and
generating, in the first work range, a first target route for causing the first work vehicle to automatically travel, based on work information of the first work, and generating, in the second work range, a second target route for causing the second work vehicle to automatically travel, based on work information of each of the first work and the second work, in a case where each of the first work and the second work is registered.
